# EUROPÄISCHE PATENTSCHRIFT

(11) **EP 1 176 032 B1**
(45) Veröffentlichungstag und Bekanntmachung des Hinweises auf die Patenterteilung: **26.11.2008**
(21) Anmeldenummer: 01116790.5
(22) Anmeldetag: 23.07.2001
(51) Int. Cl.: B60B 21/02, B60B 21/04, B60B 21/10

(54) **Felge für luftbereifte Räder von mehrspurigen Fahrzeugen**
Rim for air-tyred wheel of multi-track vehicles
Jante pour roue à pneumatique de véhicules à voies multiples

(30) Priorität: 28.07.2000 DE 10036796
(43) Veröffentlichungstag der Anmeldung: 30.01.2002
(73) Patentinhaber: Bauer, Adolf, Dr., 71379 Leutenbach (DE)
(72) Erfinder: Bauer, Adolf, Dr., 71379 Leutenbach (DE)
(74) Vertreter: Gille Hrabal Struck Neidlein Prop Roos

(56) Entgegenhaltungen:
- DE-A1- 1 605 553
- DE-A1- 2 343 746
- DE-A1- 3 904 804
- GB-A- 1 275 409

## Beschreibung

Die Erfindung betrifft eine Felge für luftbereifte Räder von mehrspurigen Fahrzeugen gemäß dem Oberbegriff des Anspruches 1.

Felgen der vorgenannten Art sind beispielsweise aus der DE 23 43 746 C2 bekannt. Die beiderseits der Radmittenebene liegenden Felgenhörner sind auf Schulterbereichen des Felgenbettes abgestützt, die auf unterschiedlichem Durchmesser liegen, wobei der Felgenbettdurchmesser im Bereich der bezogen auf das Fahrzeug innen liegenden Felgenschulter größer ist als im Bereich der außen liegenden Felgenschulter. Für den Reifen mit im wesentlichen ebener, in Richtung der Radachse verlaufender und zur Radachse konzentrischer Lauffläche ergeben sich somit Seitenwände unterschiedlicher Höhe, um im Bezug auf extreme Seitenkräfte, wie sie etwa bei Kurvenfahrt auftreten, über die kürzere innere Seitenwand eine Stabilisierung gegen ein Ausformen des Reifens nach innen zu erreichen. Diese Maßnahme ist kombiniert mit einer Abstützung der äußeren Seitenwand im Bereich ihres Reifenfußes über einen im Felgenbett formschlüssig angeordneten Stützring, dessen Außendurchmesser größer ist als der Innendurchmesser des auf der äußeren Felgenschulter abgestützten Reifenfußes und kleiner als der Innendurchmesser des auf der inneren Felgenschulter abgestützten Reifenfußes, um die Montage des Reifens auf der Felge zu ermöglichen. Durch die formschlüssige Abstützung des äußeren Reifenfußes gegen den Stützring ist dieser zwar gegen ein Abdrängen nach innen unter dem Einfluß von Seitenkräften gesichert, so dass eine spezielle Sicherung über die Ausgestaltung der Felgenschulter selbst nicht erforderlich ist, erkauft wird dies aber mit einem erheblichen konstruktiven und auch montagemäßigen Aufwand sowie dem grundsätzlichen Nachteil derartiger Lösungen mit unterschiedlichen Durchmessern der Felgenhörner, nämlich wesentlich verschlechterten Notlaufeigenschaften der Räder.

Eine entsprechende, unsymmetrische Felgenausbildung ist auch aus der DE 39 04 804 A1 bekannt, so dass zumindest die zuletzt genannten schlechten Notlaufeigenschaften des Rades auch dort gegeben sind.

In der Praxis finden deshalb Felgen mit gleichen Durchmessern für das äußere und innere Felgenhorn und im Regelfall auch die diese jeweils tragende Felgenschulter Verwendung, wobei man durch Gestaltung der Felgenschulter und gegebenenfalls deren Ausbildung mit einem sogenannten Hump die Lage des jeweiligen Reifenfußes zur Felgenschulter und deren jeweiligem Felgenhorn sichert, ungeachtet dessen, dass große Seitenkräfte aufzunehmen sind und diese in Verbindung mit aus Komfortgründen häufig weichen Seitenwänden der Reifen unter Seitenkrafteinfluß eine gewisse Formverlagerung in Richtung der jeweiligen Seitenkraft erfahren.

Hierbei werden in Folge der Lastverlagerung von der Kurveninnen- zur Kurvenaußenseite die beiden kurvenäußeren Reifen bei ihrer Seitenführungsarbeit erheblich höher belastet, und dementsprechend im Reifenaufstandsbereich, dem sogenannten Latschbereich stark zur Radinnenseite hin verschoben. Dies löst eine pendelartige Verformung über den gesamten Umfang des elastischen Reifens aus, da bei Verschieben des Reifens in seinem reifenseitig unteren Bereich nach innen, durch die im Aufstandsbereich angreifende Seitenkraft, der unbelastete obere Umfangsbereich des Reifens tendenziell nach außen ausweicht. Dies drückt sich zunächst im Lenkverhalten nachteilig ist, da der Reifen die Seitenkräfte federnd aufnimmt.

Diese laterale Federcharakteristik spielt darüber hinaus eine Rolle bei schnell wechselnden Richtungsänderungen, wobei insbesondere der Hinterachsbereich kritisch ist. Denn die Ausformung des Reifens in Belastungsrichtung erfolgt elastisch, und es ergibt sich dadurch bei Rückstellung eine laterale Beschleunigung in Gegenrichtung, die die Stabilität des Fahrzeuges beeinträchtigen kann.

Durch die Erfindung soll eine Stabilisierung des Reifens bzw. der Rad-Reifenkombination im Hinblick auf die angesprochenen Seitenkräfte erreicht werden, ohne, zumindest im wesentlichen ohne negative Auswirkungen auf den Komfort, und ohne Beeinträchtigung der Notlaufeigenschaften.

Erreicht wird dies durch die Merkmale des Anspruches 1.

Hierbei wird, bei auf gleichem Durchmesser liegenden Felgenhörnern, eine gewollt unsymmetrische Abstützung des Reifens gegen die angesprochenen Seitenkräfte dadurch erreicht, dass das innenliegende Felgenhorn der Felge eine radial nach außen zur Radmitte hin geneigte Ausbildung erfährt, so dass die innere Seitenwand des Reifens im Fußbereich desselben und auch hierzu angrenzend, eine leichte Anstellung gegen die Fahrzeugaußenseite erfährt, mit der Folge einer gewissen Vorspannung in Richtung auf die Außenseite, wobei dies in Verbindung mit einer asymmetrischen Felgenform besonders zweckmäßig ist, bei der das der äußeren Felgenschulter zugeordnete Felgenhorn eine Führungsfläche aufweist, die in gleicher Richtung geneigt ist, also bezogen auf die Radmittenebene radial nach außen zur Radaußenseite hin.

Hierbei ist bevorzugt die Neigung der Führungsfläche des äußeren Felgenhornes stärker als die des inneren Felgenhornes. Die Führungsflächen des inneren und des äußeren Felgenhornes bilden jeweils Kegelringe, wobei sich der Kegelöffnungswinkel der dem innenliegenden Felgenhorn zugeordneten Führungsfläche gegen die Radmittenebene und der Kegelöffnungswinkel der dem äußeren Felgenhorn zugeordneten Führungsfläche nach der von der Radmittenebene abgewandten Seite öffnet.

Zweckmäßigerweise liegen die jeweiligen Führungsflächen in radial gleichen Bereichen der Felgenhörner.

Weitere Einzelheiten und Merkmale der Erfindung ergeben sich aus den Ansprüchen. Ferner wird die Erfindung nachstehend anhand eines Ausführungsbeispieles näher erläutert. Es zeigen:

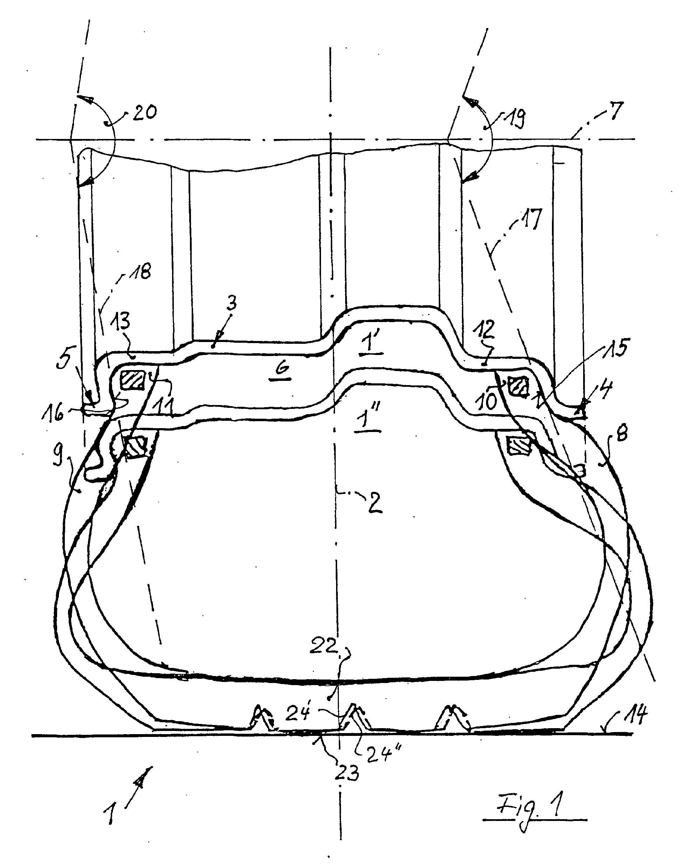

- Figur 1: eine schematisierte Darstellung eines luftbereiften Rades eines mehrspurigen Fahrzeuges, wobei nur der der Aufstandsfläche des Reifens zugeordnete Radbereich dargestellt ist und, in der Darstellung übereinander gezeichnet, eine unbelastete Radstellung und eine Radstellung bei Vertikalbelastung gezeigt sind, und

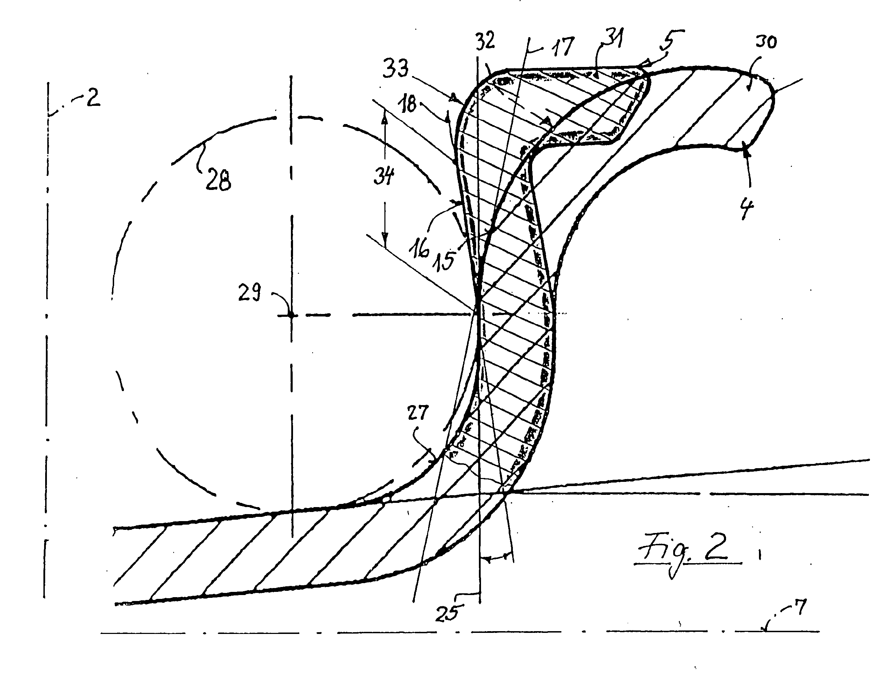

- Figur 2: eine Ausschnittsvergrößerung des Felgenhornbereiches eines luftbereiften Rades gemäß Figur 1, wobei ausgehend von der Darstellung des der Fahrzeugaußenseite zugewandten, äußeren Felgenhornes das innere Felgenhorn bezogen auf die Radmittenebene gespiegelt eingezeichnet ist, so dass die unterschiedlichen Konturverläufe für äußeres und inneres Felgenhorn im Vergleich erkennbar sind.

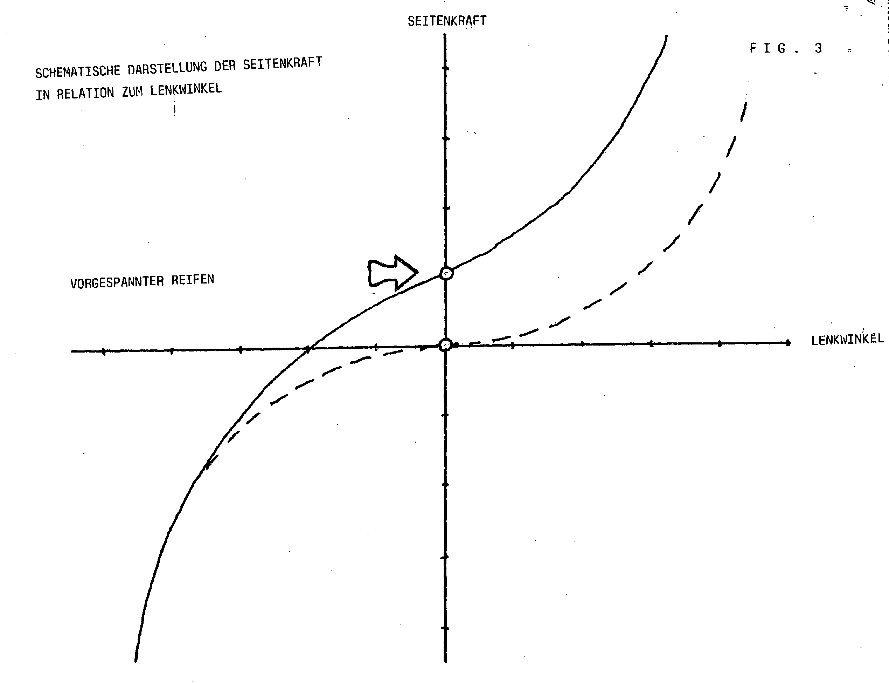

Figur 3 ein Diagramm; aus dem die auf einen auf eine erfindungsgemäß ausgebildete Felge aufgezogen bzw. montierten Reifen einwirkende Seitenkraft (volle Linie) im Vergleich zu einem auf eine herkömmliche Felge montierten Reifen einwirkende Seitenkraft (gestrichelte Linie) zu entnehmen ist.

Die Darstellung gemäß Figur 1 zeigt ausschnittsweise ein luftbereiftes Rad 1 für mehrspurige Fahrzeuge, wobei das Fahrzeug nicht dargestellt ist und bezogen auf das Fahrzeug das gezeigte Rad 1 der in Fahrtrichtung rechten Fahrzeugseite zugeordnet ist. Bezogen auf die mit 2 bezeichnete Radmittenebene der Felge 3 weist diese ein der Fahrzeugaußenseite zugeordnetes äußeres Felgenhorn 4 und ein inneres Felgenhorn 5 auf. Die Felgenhörner 4 und 5 begrenzen zusammen mit der Felge 3, die im Ausführungsbeispiel als Tiefbettfelge gestaltet ist, aber auch in anderen Felgenformen gestaltet sein kann, ein Felgenmaul 6, wobei die Felge 3, und damit auch das Felgenmaul 6 sich quer zur Radmittenebene 2 erstreckt und beiderseits der Radmittenebene 2 liegende Teilbereiche aufweist.

Das Felgenmaul 6 öffnet sich, entsprechend der radialen Erstreckung der Felgenhörner 4 und 5, bezogen auf die Radachse 7 radial nach außen und nimmt im Bereich der Felgenhörner 4 und 5 die die Reifenwände 8 und 9 nach radial innen abschließenden Reifenfüße 10 und 11 auf, die sich auf der Felge 3 im Bereich von deren Felgenschultern 12 und 13 abstützen und die seitlich durch die Felgenhörner 4 und 5 übergriffen sind. Radial nach außen schließen die Reifenwände 8 und 9 an die den Reifenumfang bildende Lauffläche 22 an, die im wesentlichen einen zur Radachse 7 konzentrischen Ring bildet und über die das Rad 1 im Bereich seiner als Latsch bezeichneten Reifenaufstandsfläche 23 gegen die jeweilige Laufbahn, hier die Fahrbahn 14 abgestützt ist.

Figur 1 lässt erkennen, dass die Felgenhörner 4 und 5 jeweils gegenüber der Radmittenebene 2 geneigte Führungsflächen 15 bzw. 16 für die übergriffenen Bereiche der Reifenfüße 10 und 11 aufweisen, wobei diese Führungsflächen 15, 16 sowohl für das äußere Felgenhorn 4 als auch für das innere Felgenhorn 5 radial nach außen zur Fahrzeugaußenseite hin geneigt sind. Die Neigung der Führungsfläche 15 des äußeren Felgenhornes 4 ist bevorzugt stärker als die der dem jeweils inneren Felgenhorn 5 zugeordnete Führungsfläche 16. Damit beschreiben die Führungsflächen 15 und 16 jeweils einen Kegelring, dessen Kegelachse zur Radachse 7 konzentrisch liegt, wobei der Kegelring, der die dem äußeren Felgenhorn 4 zugeordnete Führungsfläche 15 enthält, auf der strichlierten Kegelmantellinie 17 eines Kegel liegt, dessen Öffnungswinkel 19 sich nach der von der Radmittenebene 2 abgewandten, äußeren Radseite öffnet. Der Kegelring, der durch die dem inneren Felgenhorn 5 zugehörige Führungsfläche 16 bestimmt ist, liegt auf einer strichlierten Kegelmantellinie 18 eines Kegels, dessen Öffnungswinkel 20 sich zur Radmittenebene 2 und zur Radaußenseite öffnet. Wie der Verlauf der Kegelmantellinien 17 und 18 zeigt, ist durch die Führungsflächen 15 und 16 zusammen mit dem Felgenbett 21 ein Felgenmaul 6 gebildet, das die Grundform eines schiefen Parallelogramms aufweist, wobei das radial nach außen über den Reifen geschlossene Parallelogramm, entsprechend der Neigung der Kegelmantellinien 17 und 18, radial nach außen in Richtung auf die Fahrzeugaußenseite geneigt ist. Hierdurch ergibt sich bezüglich des Reifens eine Querabstützung mit einer gewissen Vorspannung in Richtung auf die jeweilige Außenseite, wie für das Rad 1 durch die Belastungsstellung 1'' veranschaulicht, die sich zur Grundstellung 1' dadurch unterscheidet, dass das Rad unter einer höheren Vertikallast steht, durch die der Reifen eine gewisse Abflachung erfährt, so dass sich im Bereich der Reifenaufstandsfläche 13 ein geringerer Abstand der Felge 3 zur Fahrbahn 4 ergibt. Die angesprochenen Bezugszeichen sind für das Rad 1 in seiner Grundstellung 1' eingetragen und gelten sinngemäß auch für die Belastungsstellung 1'' des Rades.

Die Vorspannung in Richtung auf die jeweilige Radaußenseite ist in der Darstellung gemäß Figur 1 insbesondere durch die seitliche Verlagerung der Längsrillen der Laufflächen 22 veranschaulicht, wobei die Längsrillen bezogen auf die Grundstellung 1' mit 24' und bezogen auf die Belastungsstellung 1'' mit 24'' angedeutet sind, wobei die gezeigte Formänderung des Reifens von einer der Grundstellung 1' entsprechenden Form in eine der Belastungsstellung 1'' entsprechende Form und umgekehrt ein Abrollen des Rades voraussetzt.

Figur 2 verdeutlicht die Unterschiede in der Ausbildung der Felgenhörner 4 und 5 durch eine dem äußeren Felgenhorn 4 überlagerte, bezüglich der Radmittenebene 2 eingespiegelte Darstellung des inneren Felgenhornes 5.

Die Radachse 7 ist in Figur 2 ebenso wie die Radmittenebene 2 angedeutet. Ausgehend von einem entsprechenden Verlauf der jeweiligen Felgenschulter 12 bzw. 13 ergibt sich auf eine zur Radmittenebene 2 parallele Bezugsebene 25 eine entgegengesetzte Neigung der Führungsflächen 15 und 16, bzw. der diesen entsprechenden Kegelmantellinien 17 und 18. Der Kegelöffnungswinkel 20 für den Kegel mit der Kegelmantellinie 18, auf der die Führungsfläche 16 des radial inneren Felgenhornes 5 liegt, liegt in der Größenordnung von etwa 150° bis etwa 170°, insbesondere im Bereich um 160°, der entsprechende Öffnungswinkel für den Kegel mit der Kegelmantellinie 17, die die Führungsfläche 15 enthält, ist jeweils kleiner, bevorzugt korrespondierend kleiner und somit im unteren Winkelbereich bei weniger als 150°. Figur 1 veranschaulicht ein diesbezügliches Beispiel.

Bezogen auf eine in Annäherung kreisförmige Kontur des verrundeten Überganges 27 zwischen Felgenschulter 12 bzw. 13 und Felgenhorn 4 bzw. 5, symbolisiert durch den Kreis 28, schließt die jeweilige Führungsfläche 15 bzw. 16 an den Übergang 27 etwa auf Höhe des Mittelpunktes 29 des Kreises 28 an, so dass sich verlaufende, zur Kontur des Kreises 28 nahezu tangentiale Übergänge ergeben. Die Breite der Führungsfläche 16 ist in Figur 2 angedeutet und mit 34 bezeichnet. Entsprechend der Neigung der jeweiligen Führungsflächen 15, 16 ergibt sich bezogen auf das äußere Felgenhorn 4 ein stärker verrundeter Übergang (Verrundungsradius 32 bzw. 33) zwischen der Führungsfläche 15 und dem axial auslaufenden Bereich 30 des Felgenhornes 4 als für das Felgenhorn 5, dessen axial auslaufender Bereich mit 31 bezeichnet ist. Die axial verlaufenden Bereiche 30 und 31 liegen bezogen auf die Radachse 7 auf gleichem Durchmesser und der Verrundungsradius 32 entspricht bezüglich des äußeren Felgenhornes 4 etwa dem Radius des Überganges 27. Für den Übergang zwischen der Führungsfläche 16 und dem axial auslaufenden Bereich 31 des Felgenhornes 5 ergibt sich ein kleinerer Verrundungsradius 33. Bevorzugt ist dieser kleiner als der halbe Verrundungsradius 32 im Übergang zum axialen Bereich 30 des äußeren Felgenhornes 4.

Figur 3 zeigt ein Diagramm, aus dem die auf einen auf eine erfindungsgemäß ausgebildete Felge aufgezogen bzw. montierten Reifen einwirkende Seitenkraft (volle Linie) im Vergleich zu einem auf eine herkömmliche Felge montierten Reifen einwirkende Seitenkraft (gestrichelte Linie) zu entnehmen ist. Während beim auf eine herkömmliche Felge montierten Reifen die Seitenkraft bei einem Lenkwinkel von 0° gleich Null ist, wirkt auf den auf eine erfindungsgemäße Felge montierten Reifen schon bei einem Lenkwinkel von 0° eine erhöhte Seitenkraft ein, die mit zunehmendem Lenkwinkel ansteigt und deutlich über der Seitenkraft liegt, die auf einen Reifen einwirkt, der auf einer herkömmlichen Felge montiert ist.

## Patentansprüche

1. Felge für luftbereifte Räder von mehrspurigen Fahrzeugen mit einem zur Radachse konzentrischen Felgenbett, das mit beiderseits der zur Radachse senkrechten Radmittenebene liegenden Felgenhörnern ein sich radial nach außen öffnendes, asymmetrisches Felgenmaul bildet, in das die Reifenwände mit ihren sich gegen das Felgenbett abstützenden und seitlich über Führungsflächen der Felgenhörner geführten Reifenfüßen eingreifen, wobei die Führungsfläche des innenliegenden Felgenhornes durch einen Kegelring eines Kegels mit mit der Radachse zusammenfallender Kegelachse und mit stumpfen Kegelöffnungswinkel gebildet ist,
**dadurch gekennzeichnet,**
**dass** der Kegelöffnungswinkel (20) des Kegels, der als Kegelmantellinie (18) die Führungsfläche des innenliegenden Felgenhornes (5) enthält, sich gegen die Radmittenebene (2) öffnet.

2. Felge nach Anspruch 1,
**dadurch gekennzeichnet,**
**dass** die Führungsfläche (15) des außenliegenden Felgenhornes (4) durch einen Kegelring eines Kegels mit mit der Radachse (7) zusammenfallender Kegelachse und mit einem stumpfen Kegelöffnungswinkel (19) gebildet ist, der sich nach der von der Radmittenebene (2) abgelegenen Seite öffnet.

3. Felge nach Anspruch 2,
**dadurch gekennzeichnet,**
**dass** der Kegelöffnungswinkel (19) des die Führungsfläche (15) des äußeren Felgenhornes (4) enthaltenden Kegels kleiner als der Kegelöffnungswinkel (20) des die Führungsfläche (16) des inneren Felgenhornes (5) enthaltenden Kegels ist.

4. Felge nach einem der vorhergehenden Ansprüche,
**dadurch gekennzeichnet,**
**dass** der Kegelöffnungswinkel (20) des die Führungsfläche (16) des inneren Felgenhornes (5) enthaltenden Kegels nahezu ein gestreckter Winkel ist.

5. Felge nach einem der vorhergehenden Ansprüche,
**dadurch gekennzeichnet,**
**dass** die Führungsfläche (15 bzw. 16) radial innen tangential in den verrundeten Übergang (27) des Felgenhornes (4 bzw. 5) in das Felgenbett (Felgenschulter 12, 13) übergeht.

6. Felge nach Anspruch 5,
**dadurch gekennzeichnet,**
**dass** der verrundete Übergang (27) nahezu Kreiskontur aufweist.

7. Felge nach Anspruch 6,
**dadurch gekennzeichnet,**
**dass** der verrundete Übergang (27) in die Führungsfläche (15 bzw. 16) auf Höhe des Kreismittelpunktes (29) des die Kreiskontur des Überganges (27) bestimmenden Kreises (28) übergeht.

8. Felge nach Anspruch 6 oder 7,
**dadurch gekennzeichnet,**
**dass** der Durchmesser des die Kreiskontur des Überganges (27) bestimmenden Kreises (28) etwa der Höhe des Felgenhornes (4 bzw. 5) entspricht.

9. Felge nach einem der vorhergehenden Ansprüche,
**dadurch gekennzeichnet,**
**dass** die Führungsflächen (15 bzw. 16) radial außen tangential in den axial abgewinkelten Bereich (30 bzw. 31) des Felgenhornes (4 bzw. 5) übergehen.

10. Felge nach Anspruch 9,
**dadurch gekennzeichnet,**
**dass** der Übergang zwischen der Führungsfläche (15 bzw. 16) und dem axial abgewinkelten Bereich (30 bzw. 31) des Felgenhornes (4 bzw. 5) Kreiskontur aufweist.

11. Felge nach Anspruch 10,
**dadurch gekennzeichnet,**
**dass** der Verrundungsradius (32) des Überganges zwischen Führungsfläche (15) und axial abgewinkeltem Felgenhornbereich (30) des äußeren Felgenhornes (4) etwa dem Radius des der Übergangskontur (27) zwischen Felgenbett (Felgenschulter 12) und Führungsfläche (15) folgenden Kreises (28) entspricht.

12. Felge nach Anspruch 10,
**dadurch gekennzeichnet,**
**dass** der Verrundungsradius (33) des Überganges zwischen Führungsfläche (16) und axial abgewinkelten Felgenhornbereich (31) des inneren Felgenhornes (5) kleiner als der halbe Verrundungsradius (32) des Überganges zwischen Führungsfläche (15) und axial abgewinkeltem Felgenhornbereich (30) des äußeren Felgenhornes (4) ist.

13. Felge nach einem der vorhergehenden Ansprüche,
**dadurch gekennzeichnet,**
**dass** die Länge der Führungsfläche (16) des inneren Felgenhornes (5) etwa dessen halber Höhe entspricht.

14. Felge nach Anspruch 13,
**dadurch gekennzeichnet,**
**dass** die Breite der Führungsfläche (16) des inneren Felgenhornes (5) etwa dessen halber Höhe entspricht.

15. Felge nach einem der vorhergehenden Ansprüche,
**dadurch gekennzeichnet,**
**dass** der Kegelöffnungswinkel (20) des Kegels des von der Führungsfläche (16) des inneren Felgenhornes (5) bestimmten Kegelringes im Bereich von 150° bis 170° liegt.

16. Felge nach Anspruch 15,
**dadurch gekennzeichnet,**
**dass** der Kegelöffnungswinkel (19) des Kegels des von der Führungsfläche (15) des äußeren Felgenhornes (4) bestimmten Kegelringes korrespondierend kleiner als der Kegelöffnungswinkel (20) des die Führungsfläche (16) enthaltenden Kegelrings ist.

17. Felge nach Anspruch 15,
**dadurch gekennzeichnet,**
**dass** der Kegelöffnungswinkel (19) des Kegels des von der Führungsfläche (15) des äußeren Felgenhornes (4) bestimmten Kegelringes einen unteren Bereich von weniger als 150° hat.

18. Felge nach einem der vorhergehenden Ansprüche,
**dadurch gekennzeichnet,**
**dass** der axial abgewinkelte Bereich (30 bzw. 31) des Felgenhornes (4 bzw. 5) zylindrisch zur Radachse (7) verläuft.

## Claims

1. Rim for wheels provided with air tires of multitrack vehicles with a rim well concentric to the wheel axis, which rim well, together with rim flanges located on both sides of the center plane of the wheel perpendicular to the wheel axis, forming an asymmetric rim mouth opening radially outwardly, which the tire walls engage with their beads that support themselves against the rim well and are guided laterally over guiding surfaces of the rim flanges, wherein the guiding surface of the inner rim flange being formed by a cone ring of a cone having a cone axis coinciding with the wheel axis and an obtuse cone aperture angle;
**characterized in that**
the cone aperture angle (20) of the cone, which as cone surface line (18) contains the guiding surface of the inner rim flange (5), opens towards the center plane (2) of the wheel.

2. Rim according to claim 1,
**characterized in that**
the guiding surface (15) of the outer rim flange (4) is formed by a cone ring of a cone having a cone aperture axis coinciding with the wheel axis (7) and an obtuse cone aperture angle (19) which opens towards the side facing away from the center plane (2) of the wheel.

3. Rim according to claim 2,
**characterized in that**
the cone aperture angle (19) of the cone containing the guiding surface (15) of the outer rim flange (4) is smaller than the cone aperture angle (20) of the cone containing the guiding surface (16) of the inner rim flange (5).

4. Rim according to one of the preceding claims,
**characterized in that**
the cone aperture angle (20) of the cone containing the guiding surface (16) of the inner rim flange (5) is almost a flat angle.

5. Rim according to one of the preceding claims,
**characterized in that**
the guiding surface (15 or 16, respectively) radially inwardly blends tangentially into the rounded transition (27) of the rim flange (4 or 5, respectively) and into the rim well (rim shoulder 12, 13),

6. Rim according to claim 5,
**characterized in that**
the rounded transition (27) is almost circular in contour.

7. Rim according to claim 6,
**characterized in that**
the rounded transition (27) blends into the guiding surface (15 or 16, respectively) at the level of the center of the circle (29) of the circle (28) defining the circular contour of the transition (27).

8. Rim according to claim 6 or 7,
**characterized in that**
the diameter of the circle (28) defining the circular contour of the transition (27) approximately corresponds to the height of the rim flange (4 or 5, respectively).

9. Rim according to one of the preceding claims,
**characterized in that**
the guiding surfaces (15 or 16, respectively) radially outwardly blend tangentially into the axially bent area (30 or 31, respectively) of the rim flange (4 or 5, respectively).

10. Rim according to claim 9,
**characterized in that**
the transition between the guiding surface (15 or 16, respectively) and the axially bent area (30 or 31, respectively) of the rim flange (4 or 5, respectively) has a circular contour.

11. Rim according to claim 1 0,
**characterized in that**
the fillet radius (32) of the transition between the guiding surface (15) and the axially bent rim flange area (30) of the outer rim flange (4) approximately corresponds to the radius of the circle tracing the transition contour (27) between the rim well (rim shoulder 12) and the guiding surface (28).

12. Rim according to claim 10,
**characterized in that**
the fillet radius (33) of the transition between the guiding surface (16) and the axially bent rim flange area (31) of the inner rim flange (5) is smaller than half the fillet radius (32) of the transition between the guiding surface (15) and the axially bent rim flange area (30) of the outer rim flange (4).

13. Rim according to one of the preceding claims,
**characterized in that**
the length of the guiding surface (16) of the inner rim flange (5) approximately corresponds to half its height.

14. Rim according to claim 13,
**characterized in that**
the width of the guiding surface (16) of the inner rim flange (5) approximately corresponds to half its height.

15. Rim according to one of the preceding claims,
**characterized in that**
the cone aperture angle (20) of the cone of the cone ring defined by the guiding surface (16) of the inner rim flange (5) is within the range from 150 DEG to 1 70 DEG.

16. Rim according to claim 15,
**characterized in that**
the cone aperture angle (19) of the cone of the cone ring defined by the guiding surface (15) of the outer rim flange (4) is correspondingly smaller than the cone aperture angle (20) of the cone ring containing the guiding surface (16).

17. Rim according to claim 15,
**characterized in that**
the cone aperture angle (19) of the cone of the cone ring defined by the guiding surface (15) of the outer rim flange (4) has a lower range of less than 150 DEG.

18. Rim according to one of the preceding claims,
**characterized in that**
the axially bent area (30 or 31, respectively) of the rim flange (4 or 5, respectively) extends cylindrically with regard to the wheel axis (7).

## Revendications

1. Jante pour des roues pneumatiques de véhicules à plusieurs voies comprenant une embase de jante concentrique par rapport à l'axe de la roue, qui forme avec les joues de jante disposées des deux côtés du plan médian de la roue perpendiculaire à l'axe de la roue, une gorge de jante asymétrique s'ouvrant vers l'extérieur en direction radiale, dans laquelle viennent s'insérer les parois du pneu avec leurs bases s'appuyant contre l'embase de jante et guidées latéralement via des surfaces de guidage des joues de jante, la surface de guidage de la joue de jante interne étant formée par un anneau conique, l'axe du cône se confondant avec l'axe de la roue et formant un angle de conicité obtus,
**caractérisée en ce que** l'angle de conicité (20) formé par le cône, qui renferme, comme ligne de l'aire latérale du cône (18), la surface de guidage de la joue de jante interne (5), s'ouvre en direction du plan médian de la roue (2).

2. Jante selon la revendication 1,
**caractérisée en ce que** la surface de guidage (15) de la joue de jante externe (4) est formée par un anneau conique, l'axe du cône se confondant avec l'axe de la roue (7) et formant un angle de conicité obtus (19), qui s'ouvre sur le côté qui se détourne du plan médian de la roue (2).

3. Jante selon la revendication 2,
**caractérisée en ce que** l'angle de conicité (19) formé par le cône contenant la surface de guidage (15) de la joue de jante externe (4) est inférieur à l'angle de conicité (20) formé par le cône contenant la surface de guidage (16) de la joue de jante interne (5).

4. Jante selon l'une quelconque des revendications précédentes,
**caractérisée en ce que**
l'angle de conicité (20) formé par le cône contenant la surface de guidage (16) de la joue de jante interne (5) est pratiquement égal à un angle plan.

5. Jante selon l'une quelconque des revendications précédentes,
**caractérisée en ce que**
la surface de guidage (15 respectivement 16) se transforme en direction radiale interne tangentielle, dans la transition arrondie (27) de la joue de jante (4 respectivement 5) en fond de jante (portée du talon 12, 13).

6. Jante selon la revendication 5,
**caractérisée en ce que**
la transition arrondie (27) présente un contour pratiquement circulaire.

7. Jante selon la revendication 6,
**caractérisée en ce que**
la transition arrondie (27) se transforme en surface de guidage (15 respectivement 16) à hauteur du centre (29) du cercle (28) déterminant le contour circulaire de la transition (27).

8. Jante selon la revendication 6 ou 7,
**caractérisée en ce que**
le diamètre du cercle (28) déterminant le contour circulaire de la transition (27) correspond approximativement à la hauteur de la joue de jante (4 respectivement 5).

9. Jante selon l'une quelconque des revendications précédentes,
**caractérisée en ce que**
les surfaces de guidage (15 respectivement 16) se transforment en direction radiale interne tangentielle, en zone coudée en direction axiale (30 respectivement 31) de la joue de jante (4 respectivement 5).

10. Jante selon la revendication 9,
**caractérisée en ce que**
la transition entre la surface de guidage (15 respectivement 16) et la zone coudée en direction axiale (30 respectivement 31) de la joue de jante (4 respectivement 5) présente un contour circulaire.

11. Jante selon la revendication 10,
**caractérisée en ce que**
le rayon de courbure (30) de la transition entre la surface de guidage (15) et la zone de joue de jante (30) coudée en direction axiale de la joue de jante externe (4) correspond approximativement au rayon du cercle (28) qui suit le contour de transition (27) entre le fond de jante (la portée du talon 12) et le cercle (28) qui suit la surface de guidage (15).

12. Jante selon la revendication 10,
**caractérisée en ce que**
le rayon de courbure (33) de la transition entre la surface de guidage (16) et la zone de joue de jante (31) coudée en direction axiale de la joue de jante interne (5) est inférieur à la moitié du rayon de courbure (30) de la transition entre la surface de guidage (15) et la zone de joue de jante (30) coudée en direction axiale de la joue de jante externe (4).

13. Jante selon l'une quelconque des revendications précédentes,
**caractérisée en ce que**
la longueur de la surface de guidage (16) de la joue de jante interne (5) correspond approximativement à la moitié de sa hauteur.

14. Jante selon la revendication 13,
**caractérisée en ce que**
la largeur de la surface de guidage (16) de la joue de jante interne (5) correspond approximativement à la moitié de sa hauteur.

15. Jante selon l'une quelconque des revendications précédentes,
**caractérisée en ce que**
l'angle de conicité (20) formé par le cône de l'anneau conique déterminé par la surface de guidage (16) de la joue de jante interne (5) se situe dans la plage de 150° à 170°.

16. Jante selon la revendication 15,
**caractérisée en ce que**
l'angle de conicité (19) du cône de l'anneau conique déterminé par la surface de guidage (15) de la joue de jante externe (4) est inférieur, de manière correspondante, un angle de conicité de l'anneau conique contenant la surface de guidage (16).

17. Jante selon la revendication 15,
**caractérisée en ce que**
l'angle de conicité (19) du cône de l'anneau conique déterminé par la surface de guidage (15) de la joue de jante externe (4) possède une plage inférieure formant un angle inférieur à 150°.

18. Jante selon l'une quelconque des revendications précédentes,
**caractérisée en ce que**
la zone coudée en direction axiale (30 respectivement 31) de la joue de jante (4 respectivement 5) s'étend en une configuration cylindrique en direction de l'axe (7) de la roue.
